# EUROPEAN PATENT SPECIFICATION

(11) **EP 4 681 103 B1**
(45) Date of publication and mention of the grant of the patent: **28.10.2026**
(21) Application number: 23787032.4
(22) Date of filing: 29.09.2023
(51) Int. Cl.: G06F 21/57, G06Q 40/08, H04L 9/40

(54) **A MACHINE-LEARNING-BASED CYBER-ATTACK SUSCEPTIBILITY DETECTION AND/OR MONITORING SYSTEM PROVIDING QUANTITATIVE MEASURES FOR A SYSTEM'S CYBER-ATTACK SUSCEPTIBILITY AND METHOD THEREOF**
AUF MASCHINELLES LERNEN BASIERENDE ERKENNUNG EINER ANFÄLLIGKEIT FÜR EINE CYBERATTACKE UND/ODER QUANTITATIVE MESSUNGEN EINER ANFÄLLIGKEIT EINES SYSTEMS FÜR EINE CYBERATTACKE BEREITSTELLENDES ÜBERWACHUNGSSYSTEM UND -VERFAHREN
DÉTECTION D'UNE SUSCEPTIBILTÉ À UNE CYBER-ATTAQUE BASÉE SUR UN APPRENTISSAGE MACHINE ET/OU SYSTÈME DE SURVEILLANCE FOURNISSANT DES MESURES QUANTITATIVES POUR UNE SUSCEPTIBILTÉ D'UN SYSTÈME À UNE CYBER-ATTAQUE ET PROCÉDÉ

(30) Priority: 13.03.2023 CH 2812023
(43) Date of publication of application: 21.01.2026
(73) Proprietor: Swiss Reinsurance Company Ltd., 8022 Zürich (CH)
(72) Inventor: ARORA, Amit Kumar, Princeton Junction New Jersey, New Jersey 08550 (US)
(74) Representative: Leimgruber, Fabian Alfred Rupert
(86) International application number: PCT/EP2023/077069
(87) International publication number: WO 2024/188477

(56) References cited:
- WO-A1-2022/217343
- US-A1- 2022 129 990
- US-B1- 11 503 061

## Description

### Field of the Invention

The present invention relates to a system and a method for measuring a cyber-attack susceptibility or cyber risk score providing a quantitative measure for a future damage or loss probability associated with a cyber-attack event impacting a computer application and/or computer system and/or IT structure using at least one computer with electronic operating means and a cloud infrastructure. The monitored cyber-attack susceptibility results from the measured exposure of the computer application and/or computer system and/or IT structure to cyberattacks originating from a computer network cyber space; particularly the present invention relates to measurements suitable for cyber-attack risk mitigation, more particularly to automated electronic mitigation and automated risk transfer.

### Background of the Invention

Almost every organization has some form of computer technology application based on a plurality of physical computer devices, an IT infrastructure and internet connectivity (in short a computer application) for business procedures using internet and cloud services. That means nearly all organizations are at risk of cyberattacks in form of unauthorized system or network access. Cyberattacks have various negative effects. They can lead to data breaches resulting in data loss, data manipulation and loss of confidential information. Organizations incur financial losses due to lost revenues, replacement of equipment, compensation of third party damages or losses, etc. Customer trust gets hampered and there is long-term reputational damage.

According to the IBM 2022 Cost of Data Breach Report, the cost of a data breach averaged USD 4.35 million in 2022. The average cost has climbed 12.7% from USD 3.86 million in the 2020 report. The top five countries and regions for the highest average cost of a data breach were the United States at USD 9.44 million, the Middle East at USD 7.46 million, Canada at USD 5.64 million, the United Kingdom at USD 5.05 million and Germany at USD 4.85 million. The average cost of a data breach for critical infrastructure organizations was USD 4.82 million. Critical infrastructure organizations included those in the financial services, industrial, technology, energy, transportation, communication, healthcare, education, and public sector industries. 28% experienced a destructive or ransomware attack, while 17% experienced a breach because of a business partners being compromised. 45% of breaches occurred in a cloud of distributed server and software infrastructure. Yet breaches that happened in a hybrid cloud environment cost an average of USD 3.80 million, compared to USD 4.24 million for breaches in private clouds and USD 5.02 million for breaches in public clouds.

To put a curb on cyberattacks, organizations implement cybersecurity measures to safeguard their computer applications using networks, cloud solutions and computer systems from unauthorized digital access. A variety of cybersecurity tools are available related to network security monitoring, encryption, web vulnerability prevention, penetration testing, antivirus software, network intrusion detection, and more. Most effective cybersecurity measures are currently based on artificial intelligence (AI) and automation. Breaches at organizations with fully deployed security AI and automation cost USD 3.05 million less than breaches at organizations with no security AI and automation deployed. According to the IBM study the average breach cost of fully deployed organizations is 65.2% less, which represents the largest cost savings in the study. Companies with fully deployed security AI and automation also experienced an over 20% shorter time to identify and contain the breach.

However, the cyberspace is particularly difficult to secure due to a number of factors: the ability of malicious actors to operate from anywhere in the world, the linkages between cyberspace and physical systems, and the difficulty of reducing vulnerabilities and consequences in complex cyber networks. Therefore, organizations intend to get financial protection to cover costs of risks related to cyber-related incidents by taking out a cyber insurance. The cyber risk is transferred to an insurance provider charging an insurance premium, which is based on cybersecurity risk assessments, a process that identifies and evaluates which assets are most vulnerable to cyberattacks and how effective cyber protection measures are. Known insurance systems rely on risk scores indicating a potential damage related to a cyber risk event impacting an organization and the probability of such an event.

For example, WO 2015/144220 A1 discloses a system for measuring diverging cyber risks associated with risk exposed computer devices comprising electronic means for processing electronic data or executing electronic processes, for example data-processing related storage devices and graphic representation devices. The system measures a total cyber risk by analyzing cyber risk exposure segments of various risk contributors, including for example operational interruption, service denial, material damage, attacks on intellectual property, etc. The system detects and captures measured parameters representing the risk exposure segments, wherein the parameters are related to the occurrence of a cyber risk events impacting the computer devices. The system accumulates the total risk for the computer devices over all cyber risk exposure segments. The total risk score can for example be used in a cyber risk insurance system used by service providers in the field of risk transfer or insurance technology for the transfer of risks related to any kind of cyber risk.

It is common to perform security checks of electronic units within a network to reduce the vulnerability to cyberattacks. The electronic units of the network are frequently scanned for identifying cyberattack risks and taking appropriate protection measures. For example, US 2022/0272115 A1 describes a cyber risk predictor, which generates a cyber risk score by auditing the various electronic units in a network and coupling a detected vulnerability of the units with a measure of the unit's criticality to the user. Information gaps or limitations to assess the cyber risk are bridged by using a machine learning model that is trained on behavioral attributes of the network, such as scan frequencies and authentication habits, as well as attributes of the electronic units, such as the operating system, open ports, etc. The machine learning model may find electronic units that are similar to the unit for which a cyber risk exposure is to be determined, but which provides more complete information. As a result, protection and remediation measures can be defined based on the identified risk score.

However, the known methods of evaluating and monitoring cyber risk exposure of computer applications using a cloud infrastructure are rather complicated and often based on unconsolidated assumptions. Gathering information about the applied protection measures is difficult and often incomplete due to the use of various service providers, manual data collection, etc.. Most organizations have only a rudimentary formal methodology and structured approach to identified cyber risks specific to their computer application environment and IT technology. While for same aspects of the cyber risk assessment there is a lack of information, for example about integration and compatibility of combinations of risk prevention means, in other aspects there is an excessive data volume to be managed. The proliferation of cyberattack approaches requires simple, fast, and accurate assessment of risk related circumstances and the measurement thereof that is not yet achieved by the state of the art risk assessment methods.

The prior art document US 2022/0129990 A1 shows a system providing a multidimensional assessment of cyber security risks. First, a digital cyber risk agent is deployed to a number of end points associated with a client. The cyber risk agent accesses the end points for cyber risk based on a detection of a number of cyber risk factors along multiple dimensions at the end points. Second, a risk score is generated for each cyber risk factor detected at the end points. Third, the risk score is aggregated for the cyber risk factors to generate an overall risk score for the client. Finally, the system modifies a base insurance premium based on the overall score. Further, US 11503061 B1 shows a system providing an automated evaluation of remediation plans using exploitability risk modeling. The system builds a machine learned exploitability risk model for predicting, based on the characteristics of a set of machines, a normalized risk score quantifying the risk that the machines are exploitable by a set of attacks. To build the model, a training dataset is constructed by labeling characteristic data of a population of machines with exploitation test results obtained by simulating a set of attacks on the population. The model is trained using the training data to accurately predict a probability that a given set of machines is exploitable by the set of attacks. In embodiments, the model may be used to make quick assessments about how vulnerable a set of machines are to the set of attacks. The model is further used to compare the effectiveness of different remediation actions to protect against the set of attacks. Finally, the prior art document WO 2022/217343 A1 shows a system for monitoring a plurality of vehicles. The system determines, based on cyber risk data corresponding to a plurality of ECU models, a cyber risk score for each ECU model. The system receives from each of the vehicles one or more security logs, and maps, for each security log, i) the ECU model of the ECU that recorded the security log, and ii) the cyber risk score of the ECU model corresponding to the security log. The system detects a cyber security threat in a vehicles based on i) an event in the security log, and ii) a cyber risk score corresponding to the security log. In response to detecting the cybersecurity threat, the system transmits an alert indicating the vehicle corresponding to the security log.

### Summary of the Invention

It is one object of the present invention to provide a system and a method for assessing cyber risks associated with computer applications using at least one computer with electronic operating means and a cloud infrastructure, which are based on structured and comparable risk exposure and risk protection parameters, allow for automated risk assessment, and provide a simple and transparent process for defining a cyber risk score. The system and method of the present invention shall facilitate dynamic risk analysis, be flexible to be tailored to an organization's use of specific computer applications, include appropriate prioritization of particular threats and vulnerabilities, and take interdependencies of cyber risks and cyber security tools into account. Further it is an object of the present invention to provide a cyber risk insurance platform comprising a cyber risk assessment system, which simplifies and automates the risk transfer process, provides accurate information for defining insurance coverage gaps, is modified to the companies computer application environments, and is comprehensive to provide optimal risk transfer modalities.

Further it is an object of the present invention to monitor and assess the value at risk in the cyber domain, with particular attention to its potential role in technical security improvement valuation. Cyber risk is a fundamental component of the overall risk faced by any IT structure. In order to plan the size of technical security requirements and to estimate the consequent risk reduction, operators of an IT structure strongly need technical-based instruments to quantify it. If technical improvements are not possible due to the measurements, the operators can decide about the possibility of sharing residual risk with a third party, such as a risk-transfer system (insurance system). if the monitoring of the susceptibility of the IT structure can be done electronically and automatedly measuring a technical-based, quantitative risk or susceptibility parameter value, the mitigation of the cyber risk with a risk-transfer system can be done completely electronically, dynamically, and automatedly with the risk-transfer structure. Recently, cyber risk management techniques are including some risk quantile-based measures that are widely employed in the domain. They refer to value at risk that, in the cyber context, takes the name of cyber value at risk (Cy-VaR). However, there are technically challenging issues of Cy-VaR, as used by the prior art systems. It is an object to provide a more appropriate and technical-based cyber-attack risk measure, e.g. for automatically initiating technical decisions in cyber context by a new quantifiable risk-based security metrics, in particular an automatedly and dynamically monitorable measures, which are technically quantifiable and monitorable by electronical means. Such measures should be based on a parameterization which allows a technical measurement of the various cyber-attack susceptibility of a complex IT structure.

According to the present invention, these objects are achieved, particularly, with the features of the independent claims. In addition, further advantageous embodiments can be derived from the dependent claims and the related descriptions.

According to the present invention, the above-mentioned objects are solved by a cyber risk assessment method and system, which measure a cyber risk score indicating a potential damage related to a cyber risk event impacting a computer application, wherein the computer application includes at least one computer device with electronic means and a cloud infrastructure. There can be several distributed computer devices that are connected to establish a computer network. The cloud infrastructure comprises at least one storage module providing information data for the computer application and/or one or more processing/operating tools processing information data and/or one or more cyber security tools configured to identify and/or fend off a potential cyber risk event. For example, the cloud infrastructure is based on a cloud architecture comprising storage, network, and virtualization components. The network components, such as routers and switches, provide communication channels that allow for information data to travel between storage components, such as storage arrays, server memories and backup devices, and the front-end computer devices, such as desktop computers, laptops, tablet computers, phones, etc. The virtualization components abstract and divide any hardware resources and networking equipment to make them accessible for the computer devices. In summary, the cloud architecture incorporates an array of cloud technology equipment, that may be spread across multiple physical locations, and connects it together to form one coherent infrastructure. The cloud infrastructure can be set up as a private, public or hybrid cloud.

The cyber risk assessment system comprises a status assessment module, which receives a computer application status report, particularly a status report indicating cloud infrastructure tools and components, and computer device components and tools, as an input signal. The computer application status report may for example be provided to the status assessment module by the computer application itself, a cloud infrastructure service provider, be provided as a manual input report or through some other channel. The status assessment module comprises a detection means, which detects and/or extracts type parameters identifying a set of type identification data from the computer application status report. The set of type identification data comprises type parameters identifying a type of the information data, a type of the one or more processing/operating tools and/or a type of the one or more cyber security tools of the cloud infrastructure.

There is a plurality of information data types that may be used and processed by the computer application, for example confidential data of various confidentiality levels, general contact profile data, e.g. of a customer data base, business related data of corporations and institutions, social media data, user data of internet service users, etc. The information data types can for example be defined by data format types such as text, numeric, multimedia, models, audio, code, software, etc. using digital data formats like XML, CSV, PDF, HTML, Plain Text, TIFF, JPEG, PNG, DNG, GIF, WAVE, AIFF, MP3, MXF, FLAC, MOV, MPEG-4, AVI, MXF, and all types of raster formats and vector formats. The information data type can be proprietary or non-proprietary data, encrypted or unencrypted data, compressed or uncompressed data, etc. The information data may be stored in electronic means of the one or more computer devices, in servers of the cloud infrastructure, and/or in another external storage unit. The type identification data identifying the information data comprises the type parameters characterizing the specific information data used by the computer application.

Also, there are a plurality of types of processing/operating tools exploited by the computer application for running the computer application. The processing/operating tools may be hosted by electronic means of the computer, in the cloud infrastructure and/or another digital device connectable to the computer application. The processing/operating tools are configured to operate the at least one computer or to process the information data according to the intended use of the computer application. That means for example they can be a type of application software or system software, such as document generation and management software, image and graphic processing software, gaming applications, spreadsheet and calculation software, data administration software, web browsers, web applications, music software, communication software, etc. Examples for such processing/operating tools are HTTP protocols, Excel, Word, PowerPoint, Firefox, Chrome, Safari, Pandora, Spotify, Netflix, Slack, Skype, Zoom, MX Player, VLC Media Player, Adobe Photoshop, macOS, Linux, Android, Microsoft Windows, etc. The type identification data identifying the processing/operating tools comprises the type parameters characterizing the specific processing/operating tools used by the computer application.

Further, there are a plurality of types of cyber security tools that can be hosted in the at least one computer and/or the cloud infrastructure. Types of cyber security tools are for example tools in the category of network security monitoring, endpoint security monitoring, encryption, web vulnerability scanning, penetration testing, antivirus software, network intrusion detection, protocol analyzers, firewalls, managed detection service, employee monitoring software, malware protection, vulnerability management, external attack surface management, etc. There are various cyber security tools available for each category, for example Argus, Nagios, Pof, Splunk, OSSEC, Tor, KeePass, VeraCrypt, NordLocker, Nikto, Paros Proxy, SQLMap, Metasploit, Kali Linux, Netsparker, Wireshark, Bitdefender Antivirus, Norton, AntiVirus, Kapersky Anti-Virus, McAfee Total Protection, Snort, Security Onion, SolarWinds Security Event Manager, Kismet, Zeek, Tufin, AlgoSec, FireMon, RedSeal, etc. Some cyber security tools offer a holistic security suite with coverage against several security vulnerabilities and threats, while other security tools focus specifically on one risk area. The type identification data identifying the cyber security tools comprises the type parameters characterizing the specific cyber security tools used by the computer application.

The detection means detects all type identifying parameters of the types of information data, types of processing/operating tools and types of cyber security tools involved in the computer application in the computer application status report and provides these type parameters as the set of type identification data, which serves as a baseline for the cyber risk assessment.

The cyber risk assessment system according to the present inventions further comprises a risk allocation module, which receives the set of type identification data and allocates one or more risk factors to at least one type parameter of the set of type identification data. Preferably, each of the type parameters of the set of type identification data is labeled with a risk factor. The risk factor is based on a risk classification scheme classifying the potential damage correlated with the types of information data, processing/operating tools and cyber security tools defined by the type parameters. The risk classification scheme for example structures the risk factors according to type categories of the information data, the processing/operating tools and the cyber security tools. The risk classification scheme may include risk factors for combinations of type categories. For example, the risk factors may be structured as a combination of a risk category identifier, like A, B, C, etc., and a numerical identifier for a damage probability. For example, the risk factor is indicated on a numerical scale, for example a scale ranging between zero for no damage risk to 100 for the highest probability of a potential large damage. It is noted that for example a cyber security tool may have a negative risk factor, indicating that the cyber security tool reduces the overall cyber risk score of the computer application. Of course, other scales of risk factors can be used, like a scale between 0 and 10. For example, risk classification scheme can be structured as a two- dimensional or there-dimensional matrix. The risk factors may indicate not only a probability of a potential damage or loss, in particular a financial loss, but also a likely extend of a damage or loss. Further, a cyber risk factor can be determined for specified combinations of a cyber security tool with a specified type of information data and/or a specified data processing/operating tool and/or another specified cyber security tool. For a specified combination of information data, data processing/operating tools and/or cyber security tools a cohesion risk factor can be defined, which aggregates individual risk factors of the information data, data processing/operating tools and/or cyber security tools. Thus, the risk classification scheme can be consolidated and the risk assessment can be simplified without losing preciseness.

The risk factors of the risk classification scheme corresponding to a potential damage or loss can be associated with a previously measured and/or calculated damage or loss caused by a specified cyber risk event impacting a specified type of information data and/or a specified type of data processing/operating tool. Thus, the risk factor takes into account calculated and/or measured real-world damages or losses caused by previous cyber risk events affecting the same or similar type of information data, type of processing/operating tool and/or type of cyber security tool. Preferably, it is taken into account, that in case there is at least one specified type of a cyber security tool in place to fend off the specified cyber risk event, the calculated and/or measured damage or loss is reduced and consequently the risk factor is altered or reduced. Thus, the efficiency of the specified cyber security tool or tools can be measured.

In summary, the risk factors correspond to an expected potential damage or loss for a type of information data, processing/operating tool or cyber security tool, and combinations thereof in case of a cyber risk event. The potential damage or loss can be determined by measuring and quantifying a damage or financial loss for example due to operational disruption and lost revenue, increased infrastructure costs, costs for altering business practices, lost profits due do lost customers, replacement of damaged digital assets, liabilities arising out of virus transmission, privacy issues, etc. For example, the risk factors are based on measurements of a time of business interruption, a frequency of interruptions, a number of affected computer devices or business sites, a time required to replace equipment, the size of affected or lost information data, etc.

Accordingly, the risk classification scheme comprises several risk categories describing differing damage or loss categories. For example the risk classification scheme at least includes a risk category for computer application downtime, for replacing the computer application, for costs of resource losses, for costs of information data abuse and/or for costs of third party liability, as mentioned above. Resource losses can be material or immaterial losses such as loss of clients, business interruption, loss of infrastructure or computer components, etc. and can define different risk categories. Each risk category includes one or more risk factors corresponding to a potential damage or loss in case of a cyber risk event. For example, within a given category the risk factors may increase, wherein low risk factors may indicate a low probability of a cyber risk event and a higher risk factor indicates a higher probability or a cyber risk event.

In summary, a cyber risk factor represents a quantified probability of the occurrence of a cyber risk event impacting the computer application and causing a damage or loss, wherein the quantified probability is associated with measuring parameters of a classified cyber risk event and a classified damage or loss for capturing a risk exposure. The damage or loss can be characterized by measuring damage or loss parameters of a time period of computer application downtime, a time period for replacing the computer application, costs of resource losses, costs of information data abuse and/or costs of third party liability, as mentioned earlier. The measuring values of the damage or loss parameters are then associated to a risk factor.

Further, the cyber risk assessment system according to the present inventions comprises a weighing module, an aggregation module, and an output signal generator. The weighing module comprises a machine learning structure. The weighing module obtains the set of type identification data and the associated one or more risk factors of the at least one type parameter as input data for the machine learning structure. The machine learning structure includes a regression model for dynamically defining weighing factors for the one or more risk factors. The machine learning structure receives the one or more risk factors as at least partially labelled data, which is used as the basis for the regression model to interpolate a relevance of the respective risk factor and specify the weighing factors accordingly. Thus, the weighing module weighs the one or more risk factors associated to detected type parameters of the set of type identification data based on the weighing factors to provide weighted risk factors. Further, the aggregation module comprises an aggregation structure for aggregating the weighted risk factors as an aggregated cyber risk score as an indicator for the overall risk exposure level of the computer application. The output signal generator provides the aggregated cyber risk score as an output signal of the cyber risk assessment system.

According to the present invention the aggregated cyber risk score is automatically derived from the computer application status report, and is dynamically refined by the machine learning structure of the weighing module to provide an accurate and transparent indicator for a potential damage or loss caused by a specific cyber risk event. The cyber risk assessment method and system provide an integrated cyber risk score spanning multiple verticals to assess the effectiveness of the cyber risk mitigation features of the computer application. At the same time the aggregated cyber risk score is based on quantitative input parameters reflecting a current status of the computer application and providing precise information without the need of unnecessary large data volumes.

According to a further aspect of the present invention a cyber risk insurance platform comprises the cyber risk assessment system or is realized as a computer application as specified above. Advantageously, the cyber risk insurance platform connects at least one user computer device and the cloud infrastructure via a data network, and comprises an insurance premium module comprising a transfer structure for dynamically transferring the aggregated cyber risk score into an insurance premium value. The cyber risk insurance platform uses the aggregated cyber risk score for determining a risk transfer premium for an insurance policy to cover analyzed potential damages or losses to the computer application arising from cyberattacks. Further, the cyber risk insurance platform may provide computer application status reports of other users of computer applications subjected to cyber risk events in the past as well as measured damage or loss data related to the events as labeled input data for the machine learning structure. The insurance premium and policy can be based on automated and dynamically updates cyber risk assessments to provide customized risk transfer modalities for insurance providers.

In one embodiment the cyber risk assessment method and system of the present invention, the computer application status report is represented by a cloud infrastructure report summarizing cloud infrastructure services represented by storage services for storing one or more types of information data and/or by one or more data processing services for processing information data and/or by one or more cyber security services provided via cloud services. The storage services of the cloud infrastructure can be designed for storing, accessing, and maintaining data so that the computer devices do not need to be equipped with data storage themselves. Instead, the information data is saved on remote, third-party servers. Storage services of the cloud infrastructure are for example: DropBox, iCloud, Google Drive, Microsoft One Drive, IDrive, Mega, Box, pCloud, Tresorit, Amazon Drive, etc. The processing services of the cloud infrastructure can be represented by the processing/operating tools as mentioned above. They can provide system software and application software components. For example, they can be integrated into the computer application as plug-in or add-on software components. Examples for plug-in or add-on software are Adobe Accrobat, Hotjar, Smush, Yoast SEO, HubSpot WordPRess, All In One SEO, Quicktime, Java virtual machine, etc. Likewise, the cyber security tools can be integrated into the computer application as plug-in or add-on software components, or they can be located elsewhere in the cloud infrastructure. Examples for cyber security tools are mentioned above. The cloud infrastructure report is created by the cloud services provider or providers, and lists all services and tools provided for the computer application by the cloud infrastructure. Advantageously, the cloud infrastructure report is represented by one or more contract documents defining the cloud infrastructure services and/or one or more invoicing documents established for invoicing cloud infrastructure services of the computer application. The infrastructure report documents may be electronic documents provided to the detection means via the computer application network, for example as pdf, XPS, jpeg or similar files. Alternatively, the documents may be provided as physical documents, that are for example scanned for further electronic processing. The detection means of the status assessment module may comprise a reading feature for extracting the type parameters identifying the type identification data from the cloud infrastructure report.

The cyber risk assessment method and system according to the present invention advantageously uses existing documentation resources to analyze the cyber risk prevention environment and the cyber security posture for the computer application and identify the cyber risk protection measures in place. This allows for fast, current, and accurate assessment of an existing cyber security posture, and provides detailed analysis of the effectiveness thereof. The cyber risk insurance platform and the cloud infrastructure report, respectively, provide comprehensive information about the assets at risk and any protections measures to prevent such risk, which are summarized in the set of type identification data specific for the analyzed computer application. Allocating risk factors to each of the types of information data, processing/operating tools and cyber security tools allows for a quantified risk indication, which is refined according to real-world measurements of potential damages or losses by applying the weighing factors. Consequently, the aggregated cyber risk score determined by the cyber risk assessment system provides up-to-date, fast, and accurate assessment of potential damages or losses related to presently existing cyber risk events and allows to forecast the likelihood of future damages or losses as a basis for risk transfer. The cyber risk assessment is customized to the specifics of the individual computer application and can be executed automatically to determine a dynamically updated aggregated cyber risk score.

In one embodiment the cyber risk assessment system of the present invention comprises a controller module for dynamically controlling the computer application and the electronic means thereof, respectively, based on the output signal of the output signal generator. That means the cyber risk assessment system controls the computer application based on the detected cyber security risk. The controller module may be integrated in computer devices of the computer application, in the cloud infrastructure or the cyber risk insurance platform. For example, the controller module may be configured to initiate automatic updates for processing/operating tools and cyber security tools, output alerts for detected cyber security risks and/or inhibit cloud infrastructure access for computer devices. Also, the controller module may be configured for detecting cyberattacks and creating a cyber risk detection protocol, which may list types of prevented cyberattacks, frequency of cyberattacks, etc. The cyber risk detection protocol may be included in the computer application status report, to provide more details about the status of the computer application.

In a further embodiment of the cyber risk assessment method and system of the present invention the regression model of the machine learning structure is realized as a linear regression model or a L2-enabled Ridge Regression model. The linear regression model allows for linear extrapolation based on potential, measured, or calculated damage or loss training data sets to determine a weighing factor for identified risk scores. To further refine the weighing factors, the L2-enabled Ridge Regression model regulates highly correlated variables of the regression model to avoid over-fitting of the model. Thus, overvaluation of outlier values can be neutralized. Advantageously, the regression model of the machine learning structure can be realized as a random forest model or a gradient boosted model. The random forest model provides a multitude of decision trees, wherein the mean or average of the individual trees serves as a basis to determine the weighing factor. The gradient boosted model provides consecutive decision trees while optimizing each tree based on previous outcomes resulting in an additive model to determine the weighing factor. Thus, the gradient boosted model may provide a more precise outcome than the random forest model, in case over-fitting can be avoided. Also, the random forest model and the gradient boosted model can be combined as a gradient boosted random forest model.

### Brief Description of the Drawings

The present invention will be explained in more detail below relying on examples and with reference to these drawings in which:
Figure 1 shows a schematical illustration of an exemplary cyber risk assessment system according to the invention for measuring a cyber risk score indicating a potential damage or loss related to a cyber risk event impacting a computer application.
Figure 2 shows a flow diagram illustrating an exemplary a process flow of an exemplary cyber risk assessment method according to the invention for assessing a cyber risk exposure of a computer application.
Figure 3 shows a schematical illustration various possible risk-factors providing a measurable susceptibility to cyber-attacks of an IT infrastructure, and if occurring cause a measurable impact on the IT infrastructure and/or associated loss.

### Detailed Description of the Preferred Embodiments

With cloud computing quickly evolving to host infrastructure and data, cyber-security is a matter of paramount importance, more than ever. Depending on the type, sensitivity and nature of the data and software tools being hosted on cloud infrastructure, certain cyber security services, if used and configured correctly, can be highly beneficial in mitigating cyber security threats.

In summary, the present machine-learning-based cyber-attack susceptibility monitoring and/or measuring system or device, i.e. the present cyber risk assessment and/or measuring system applies machine learning regression techniques for the purposes of determining a cyber-security posture of cloud infrastructure set-ups of running computer applications. The term "cyber *risk",* as used herein, defines a measure for an IT infrastructure having a measurable susceptibility for cyber-attacks, for example measurable as a probability value for the occurrence of a cyber-attack within a future time window having a measurable impact damage or loss on the IT structure. It est, cyber risk can e.g. be measured as a probability value, for example in the rage of 0 to 1, for a future time window. Said probability measure can be experimentally verified in said future time window by measuring of actually occurring cyber-attacks and their impacts on the IT structure, respectively. The inventive solution relies on the premise that once knowledge of the types of data contained in the cloud is assessed along with the services that the cloud user has enrolled in, assuming correct configuration, an overall cyber risk score can be associated to the cyber security posture. Furthermore, the definition of various verticals of cyber security allows to break down the risk aspects in order to obtain a more granular view on the security posture. These risk aspects each have a risk score associated with them, depending on the cloud services that a cloud user has enrolled in.

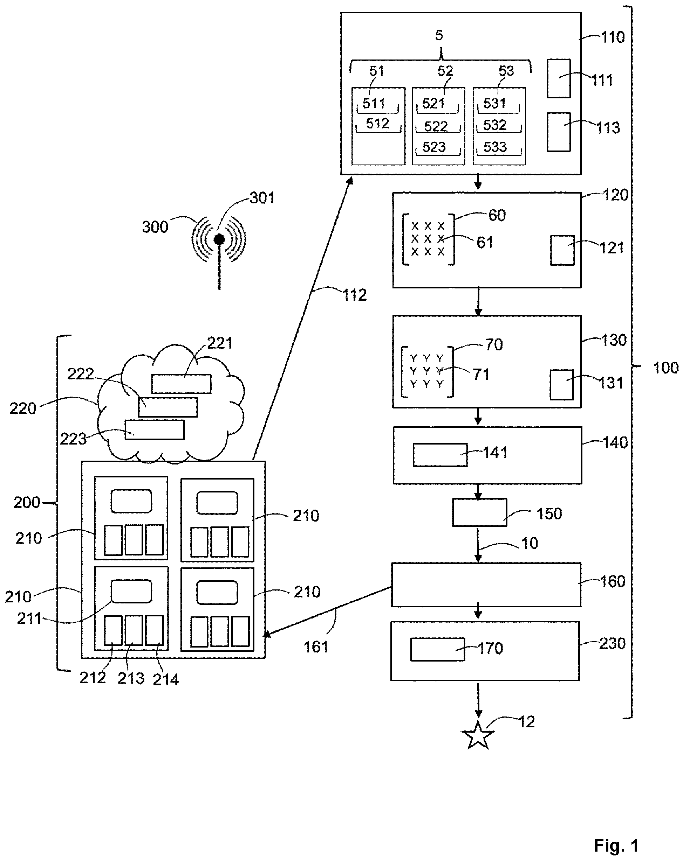

Figures 1 shows an example of a cyber risk assessment system 100 for measuring a cyber risk score indicating a potential damage or loss related to a cyber risk event impacting a computer application 200, which is realized as a cyber risk insurance platform. Figures 1 illustrates components of the cyber risk assessment system 100 for measuring a cyber risk score indicating a potential damage or loss related to a cyber risk event 80 impacting the computer application 200. The cyber risk event or cyber incident can be cyberattack such as a denial of service (DoS) attack, man in the middle (MITM) attacks, phishing attacks, ransomware attacks, password attacks, structured query language (SQL) injection attacks, URL interpretation attacks, domain name system (DNS) attacks, session hijacking attacks, brute force attacks, web attacks, drive by attacks, eavesdropping attacks, malware attacks, trojan horses, insider attacks, combinations thereof or any other intrusion or interruption of the normal intended operation of the computer application. The example computer application 200 uses four computer device 210, which can be distributed devices of a user organization 20. Each computer device 210 comprises several electronic means for operating the computer device 210 and/or the computer application 200. The electronic means for example can be a display 211, a processing unit 212 providing processing and computing tools, a storage unit 213 providing information data for the computer application, a software module 214 processing tools for processing data, etc., as usually employed in a computer device such as a desktop computers, laptops, tablet computers, phones, watches, or any other electronic device capable of interacting with the internet. Further, the computer application comprises a cloud infrastructure 220, which comprises at least one storage module 221 providing information data for the computer application, one or more processing/operating tools 222 for processing information data and one or more cyber security tools 223 configured to identify and/or fend off a potential cyber risk event 10. The storage module 221 can be in addition to the storage unit 213. For example, the storage module 221 of the cloud infrastructure 200 is used as a back-up solution for the storage unit 213, or it could provide supplemental information data. In an alternative embodiment of a computer application 200, just one of the storage unit 213 and the storage module 221 may be present to provide data storage.

The cloud infrastructure 220 comprises all hardware and software components that are needed to support the delivery of cloud services for the computer application 200, particularly physical components like networking equipment, servers, data storage and a hardware abstraction layer that enables the virtualization of infrastructure resources. The computer devices 210 and the cloud infrastructure 220 collaborate with a digital network 300 realized by an internet environment for providing transmission pathways for data and service tools. For example, the digital network 300 is provided by a network of satellites 310. The cyber risk assessment system 100 and the computer devices 210 are realized as a web-enabled system and devices accessing the internet environment, as commonly known. For example, They are equipped with at least one application programming interface (API) for accessing information data, processing/operating tools, and cyber security tools.

The cyber risk assessment system 100 according to the present invention comprises a status assessment module 110 for receiving a computer application status report 111 providing a status report of the cloud infrastructure indicating cloud data, services and tools involved in the computer application and/or a status report of the computer devices indicating data and tools involved in the computer application. Th computer application status report 111 is provided as an input signal 112 from the computer application 200, for example via a digital pathway provided by the digital network 300. The status assessment module 110 comprises a detection means 113, such as a scanner, pdf reader or the like, for detecting and/or extracting type parameters identifying a set of type identification data 50 from the computer application status report. The set of type identification data 50 comprises information data type parameters 51 identifying a type of the information data, processing/operating tool type parameters 52 identifying a type of the one or more processing/operating tools 222 of the cloud infrastructure 220 or of the computer devices 210, and/or cyber security tool type parameters 53 identifying a type of the one or more cyber security tools 223 of the cloud infrastructure 220 or of the computer devices 210.

There is a plurality of options for information data types, processing/operating tool types and cyber security tool types to be involved in the computer application 200 in form of a cyber risk insurance platform, as explained above. As a simplified scenario of an application of the cyber risk assessment system 100 illustrated in Figure 1, the automated, electronic cyber risk-transfer platform intends to provide communication services between various computers, like the computer devices 210, for exchanging text and pictures. For example, the text may describe conditions for claiming a coverage payment after a car accident, which is supported by pictures of the damaged car. For this simple scenario, the set of type identification data 50 received by the computer application status report 111 for example comprises a data type parameter 511 identifying information data in form of text data and a data type parameter 512 identifying information data in form of image data, a data type parameter 521 identifying a processing/operating tool in form of a text editor, a data type parameter 522 identifying a processing/operating tool as Adobe Photoshop software and a data type parameter 523 identifying a processing/operating tool as Gmail emailing software, and a data type parameter 531 identifying a cyber security tool as Bitdefender, a data type parameter 532 identifying a cyber security tool as Norton and a data type parameter 523 identifying a cyber security tool as Barracuda email defense. Of course, in more realistic scenarios of an application of the cyber risk assessment system 100 there will be several more information data types, processing/operating tool types and cyber security tool types involved in the intended use of the computer application 210.

Further, the cyber risk assessment system 100 according comprises a cyber-attack susceptibility aggregation or risk allocation module 120, which is designed to receive the set of type identification data 50 for example using an interface to the status assessment module 110. The risk allocation module 120 hosts a risk classification scheme 6, which is realized as a collection, list, table, or matrix of risk factors 61 quantifying a probability of a cyber risk event 80 and classifying the potential damage or loss. As mentioned above, the risk classification scheme 6 can for example provide a structure of risk category identifier A, B, C, D, etc. A may refer to a denial of services risk corresponding to a computer application downtime. B may refer to a ransomware risk correlated with a time for replacing the computer application. C may refer to a password attack corresponding to costs of resource losses, for example loss of clients. D may refer to a phishing attack reflecting costs of third-party liability. Accordingly, further categories may be defined. Each category spans a scale of risk factors 61, for example ranging from 1 to 5. The risk allocation module 120 comprises an allocation structure 121 designed for allocating one or more risk factors 61 to at least one type parameter of the set of type identification data 5. The risk factor 61 are for example based on calculated and/or measured damages or losses caused by an identified cyber risk event. Preferably, the processing/operating tools and the cyber security tools are further categorized specifically on 3 distinct categories:
1. Appropriateness: this refers to the appropriateness of using the tool in question for the identified risk potential and other factors such as enterprise set up, size, etc.
2. Defensive Power: this refers to how advanced and powerful the tool is, in the identified risk category.
3. Cohesion with other cyber security tools or services: along with other cyber security tools and services that have been enlisted in the computer application status report, this refers to how well the tool in question meshes into and complements the other tools and services in creating an effective cyber-security profile.

Thus, the risk factors of the risk classification scheme corresponding to a potential damage or loss can be defined by a previously measured and/or calculated damage or loss caused by a specified cyber risk event 80 impacting the specified information data type 51, the specified processing/operating tool type 52, while the specified cyber security tools 223 are in place to fend off the specified cyber risk event 10. The measured and/or calculated damage or loss can for example be characterized by measuring damage or loss parameters for the time period of computer application downtime, the time period for replacing the computer application, the costs of resource losses, the costs of information data abuse and/or the costs of third-party liability. Advantageously, the measuring values of the damage or loss parameters are incorporated into the risk factors 61.

In the present example scenario, risk factors are for example allocated to the set of type identification data 50 as follows. The text data type parameter 511 is allocated a risk factor A3 indicating a denial of services risk and a potential damage or loss level 3. The image data type parameter 512 is allocated a risk factor B4 indicating a ransomware attack risk and a potential damage or loss level 4. The adobe photoshop tool type parameter 521 is allocated a risk factor A1 indicating a denial of services risk and a potential damage or loss level 1. The text editor tool type parameter 521 is allocated a risk factor A1 indicating a denial of services risk and a potential damage or loss level 1. The adobe photoshop tool type parameter 522 is allocated a risk factor D5 indicating a phishing risk and a potential damage or loss level 5. The email tool type parameter 523 is allocated a risk factor C4 indicating a password risk and a potential damage or loss level 4. The bitdefender tool type parameter 531 is allocated a risk factor A2 indicating a denial of services risk and a potential damage or loss level 2. The Norton tool type parameter 532 is allocated a risk factor D3 indicating a phishing risk and a potential damage or loss level 3. The Barracuda tool type parameter 533 is allocated a risk factor C1 indicating a password risk and a potential damage or loss level 1. The risk classification scheme 6 may comprise a category for unidentified information data, unidentified processing/operating tools and/or unidentified cyber security tools. A risk factor indicating an average or median potential damage or loss level may be allocated to such data and/or tools. The set of type identification data 50 with the allocated risk factors represents a labeled data set reflecting the cyber risk potential of the specific computer application 200 used by the user organization 20.

In general, in order to obtain a reliable and technically robust measure of the cyber-attack susceptibility, an account must be taken of vulnerability, assets, and the profile of potential attackers.

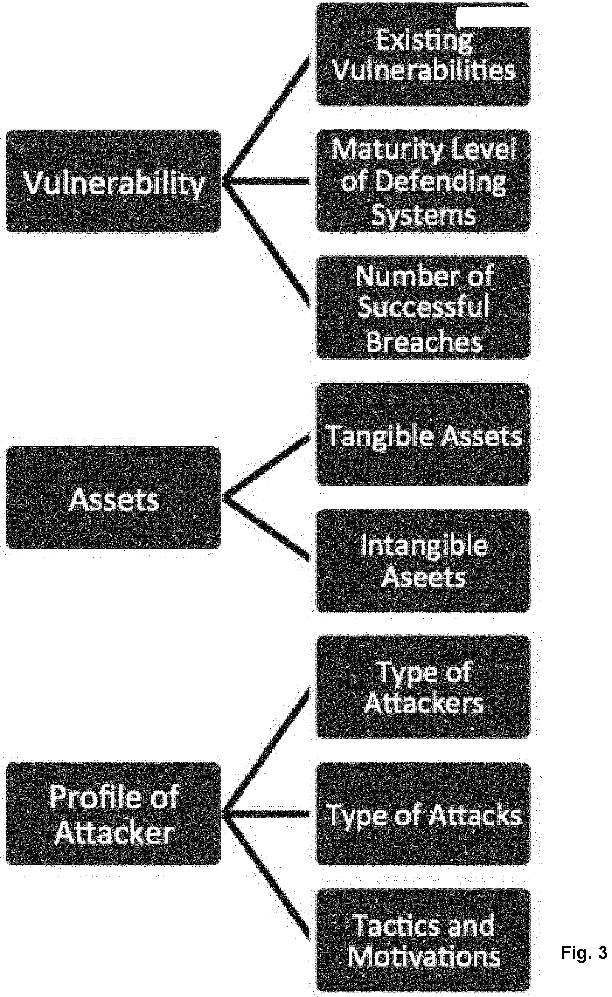

In the present invention, the susceptibility measure or score for the occurrence of a cyber-attack comprises measured vulnerability relating to the occurrence of a technical flaw, design, or implementation error that can induce an unexpected event affecting the security of the information system. The undesirable event can be quantified by a measurable certainty, and it can be due to a single or a series of occurrences. Users can be a significant source of vulnerabilities, i.e. their impact need also to be quantifiable by a technical parameterization; indeed, often employees are the weak link of a successful cyberattack (e.g., accidental publication of confidential information, non-custody of laptop computers containing highly sensitive information). Moreover, the vulnerability assessment of an IT structure also may depend on its previous ability to front successful attacks and on the maturity level of its security system. A possible shortage of standard maturity settings needs also to be quantified since it reduces cyber value-at-risk performance. As a consequence, it is even more obvious that a technical-based objective quantification and measuring system of cyber-attack threat exposure is needed. Figure 3 shows the various possible risk-factors providing a measurable susceptibility to cyber-attacks of an IT infrastructure.

A basic element of the present invention is that it comprises a parametrization for tangible and intangible IT components or other assets under threat. In particular, the present system comprises also a technical parametrization allowing to capture intangible assets (i.e., human-capital, reputation, knowledge, expertise, etc.), which contribute up to 80% of an overall possible loss. After identification, assets are appropriately parameterized, where this task, with regard to intangible assets, may be performed by accessing corresponding databases comprising historical data of occurring losses, which allow to quantify and parameterize also the impact of intangible assets. As an additional inventive step, a step of asset classification into discrete categories, in particular automated asset classification based on data mining and pattern matching of the components of the IT structure or asset structure to known asset structures, can be applied that facilitate the definition of the overall security risk and susceptibility to cyber-attacks. It has to be noted that measuring the impact and consequences of a cyber incident is challenging because of the distinctive nature of the components of an IT structure and the information assets.

As a third inventive step, a parametrization of the profile of the potential attackers can be applied, that is, the type of attackers, their motivations, and the kind of attack they are prone to perpetrate. With regard to the type of attackers, the system can e.g. distinguish four types: cyber criminals, hacktivists, state-sponsored attackers, and insider threats. A more detailed classification can also be applied, if a more precise measurement is required. Cyber criminals commit cyber-crime aiming at generating profits by stealing confidential company information or personal data. Nowadays, they represent the most leading and most proactive kind of attacker. Hacktivists are individuals or groups of hackers who act on religious belief or social and political ideology. State-sponsored attackers have particular goals which comply with the main interests of their home country. Finally, insider threats come from both full-time and temporary workers, but also from customers and contractors. The threats can be motivated by malicious, accidental, or negligent behavior. As shown for the present invention, these four types can be captured by four different parameterization providing a sufficient precision of measurement. In particular, a major part is four different weighting parameters for classifying the different impact strength. Among the most common cyber-attacks, that can be faced by an IT infrastructure of an individual or an organization, the brute-force attack by which criminals use the trial and error approach to guess the passwords successfully, the credential stuffing used to steal credentials to access to a user's account, have to be weighted the most. Another of the most prevalent kind of cyber-attacks is phishing, which consists of sending emails from a trust-seeming source to gain personal information, which should also be assigned with an appropriate weighting strength value. Finally, it is to mention malware, which is a malicious software downloaded in a system without any visible signs. The weighting of the four parameterization can be performed dynamically by the inventive system based on monitoring of an occurring frequency of similar events listed appropriate databases, in particular state governed databases. The fundamental goal of handling cyber-attacks efficiently, strongly depends on the probability measurement of a successful attack. In fact and as mentioned, the rate of occurrence is technically hard to measure, because attackers are adaptable and the changes in their strategies are unpredictable. The present inventive system and its parameterization offers efficient and precise measurement based on an attack modelling technique to monitor the weakness of the IT infrastructure, and the attitude and objectives of the adversary.

Regarding the measurement of the probability for a successful cyber-attack, it is a technically challenging task, either. The reason is that there is a lack of historical data on the frequency and severity of attacks. One reason could be found in information sharing barriers, due to the fact that companies do not want to disclose cyber incidents that they have been exposed to, since this could cause huge secondary damage. However, reporting requirements have been introduced since 2002 in many states. Such databases can e.g. be assessed and used by the present inventive system to dynamically weight the different parameterization of the different kinds of cyber-attacks and to adjust or fine-tune the measured and/or assigned frequency associated with a specific kind of cyber-attack. In measuring the cyber risk score, The system should not ignore that the security level of one system may depend on the security of others. As a consequence, an attacker could potentially exploit a system through a channel that the organization shares with a partner with a much weaker security level. Moreover, in order to measure cyber risk exposure, it is essential to take into account the dependencies among the three components (vulnerability, assets, and attacker profile). For example, the vulnerability of a system mainly depends on the relevance of its assets to eventual attackers and the common behavior in the attacker community. Thus, the risk of undergoing a cyber-attack is closely linked to the company's assets and the attacker profile.

The inventive system proposed a technically new approach, where prospective and concrete application in the use of machine-learning and artificial intelligence (AI) in cyber risk monitoring is deepened, and a new cyber risk monitoring architecture is disclosed. The aim is to improve resilience and cyber risk measuring. Thus, the inventive system provides a new architecture and design of a dynamic and self-adapting system using machine-learning, artificial intelligence, and real-time intelligence for predictive cyber risk measurements and monitoring also in complex IT environments and infrastructures. As an embodiment variant, the present system uses deep learning structures, e.g. based on loT cyber security, and risk modeling structures establishing parametrical relations providing an improved technical approach for a dynamic and self-adapting system for predictive cyber risk monitoring based on measured data supported with Artificial Intelligence and Machine Learning and real-time intelligence in data processing. The inventive system proposes a new concept for a cognition engine design and Machine Learning to automate anomaly detection. This engine instigates a step change by applying Artificial Intelligence and Machine Learning embedded at the edge of IoT networks, to deliver safe and functional real-time monitoring for predictive cyber risk measurements. This will enhance capacities for real-time risk monitoring and assists in real-time alarm regarding possible threats that arise when complex IT structures interact with the global backbone network. For example, as an embodiment variant, the cognitive design of the present system can e.g. be realized by connecting the lost exposure of cyber risk from human-computer interaction (frequency), in different information knowledge management systems (magnitude), with artificial intelligence, which can provide predictive feedback sensors for primary and secondary loss (vulnerabilities). These feedback sensors represent dynamic real time data mechanisms that assist and enable better measurements of the vulnerabilities, prior to cyber-attacks. The reliability of the cyber risk monitoring can increase significantly if the present system is used based on its dynamic and self-adopting ML enhanced feedback sensors to assess, predict, monitor, and address the actual risks of cyber-attacks.

It is to be noted, that the present AI/ML-based approach is technically essential for advancing beyond the limitations of the prior art Value-at-Risk (VaR) modeling and monitoring system, where Bayesian and frequentist methods are applied with and beyond VaR modeling. This requires federated learning and blockchain based AI architecture where AI processing shifts from the cloud to the edge and the AI workflow is moved and data restricted to the device. State of the art gaps in cyber risk monitoring are especially problematic in the areas of descriptive, predictive, and prescriptive monitoring. The inventive system can e.g. use short term power load forecasting in monitoring of the security of the IT infrastructure. For the present system, application of machine-learning and artificial neural network (ANN) for short-term and long-term cyber risk forecasting showed to be technically efficient. Generalized regression neural network (GRNN) is used for solving the occurring non-linear problems. As the measured susceptibility curves of IT infrastructures show, cyber risk monitoring and measurements are a technical non-linear problem. As an embodiment variant, the present system applies GRNN for the cyber risk monitoring. However, the value of the spread parameter determines the performance of the GRNN, thus, in this context, an optimization algorithm with decreasing step size can be used to select an appropriate spread parameter. Combined with the other relevant factors and the periodicity of short-term or long-term susceptibility to cyber-attacks, an effective cyber risk and susceptibility monitoring is realized based on the GRNN with decreasing step. Performance of the proposed GRNN model can easily be compared to other ANN on the basis of prediction error, however, shows to be the most efficient.

For further refining the cyber risk assessment, the system 100 comprises a weighing module 130 comprising a machine learning structure 131. The weighing module 130 obtains the set of type identification data 50 and the allocated risk factors 61. The machine learning structure 131 includes a regression model for dynamically defining weighing factors 70 for the risk factors 61. The weighing module130 weighs the factors 61 associated to the detected type parameters 51, 52 and 53 of the set of type identification data 50 based on the weighing factors 70, which results in weighted risk factors 71. The weighing factors further optimize the cyber risk assessment of the computer application 200.

In order to accurately assess the overall cyber risk score of the user organization 20, the cyber risk assessment system 100 applies and uses regression modeling structures which can weigh the relative importance of the identified cyber risks. This can be used to assess not only the overall cyber security risk posture, but also be used in pricing cyber insurance premiums, as mentioned earlier. In order to be able to use machine learning for determining the weighing factors, preferably a quantitative machine learning regression model is used. As a baseline, the weighing module 130 uses linear regression as well as L2-enabled Ridge Regression. While these modeling structures performed well on the set of type identification data 5, they are limited by their scaling to increasing complexity. For more complex datasets, modeling structures such as gradient-boosted random forest modelling can be, which is able to accurately process increasingly complex datasets, yielding greater predictive power.

Furthermore, the cyber risk assessment system 100 comprises an aggregation module 140 for aggregating the weighted risk factors 71 as an aggregated cyber risk score 10 for the computer application, and an output signal generator 150 providing the aggregated cyber risk score 10 as an output signal of the cyber risk assessment system. The aggregation module 140 may use commonly known aggregation structures to summarize all risk aspects of a potential risk exposure of the computer application 200, which are represented by the weighted risk factors. The aggregated cyber risk score 10 allows to predict a cyber security vulnerability of the computer application that may arise in the future.

In the example of Figure 1, the cyber risk assessment system 100 comprises a controller module 160 for dynamically controlling the computer application 200 and the electronic means thereof, respectively, based on the output signal of the output signal generator. The controller module 160 may transmit a steering signal 161 to the computer application 200 to control the computer application 200 based on the aggregated cyber risk score 10. As mentioned earlier, the controller module 160 may deny access to the computer devices 210, initiate an operation or processing stop, initiated updates of processing/operating tools, request an update of passwords, request double authentication, etc. The controller module 160 further improves the automated steering of the cyber risk assessment system 100.

Finally, in the example of the cyber risk assessment system 100 according to the present invention as illustrated in Figure 1 the computer application 200 is realized as a cyber risk insurance platform connecting user computer devices of various user organizations using the cloud infrastructure via the digital network 300. To provide the cyber risk insurance platform with information about adequate risk transfer modalities, the cyber risk assessment system 100 comprises an insurance premium module 170 for dynamically transferring the aggregated cyber risk score 10 into an insurance premium value. Alternatively, the cloud infrastructure 220 could include a cyber risk insurance architecture, which is designed to translate the aggregated cyber risk score 10 into an insurance premium value.

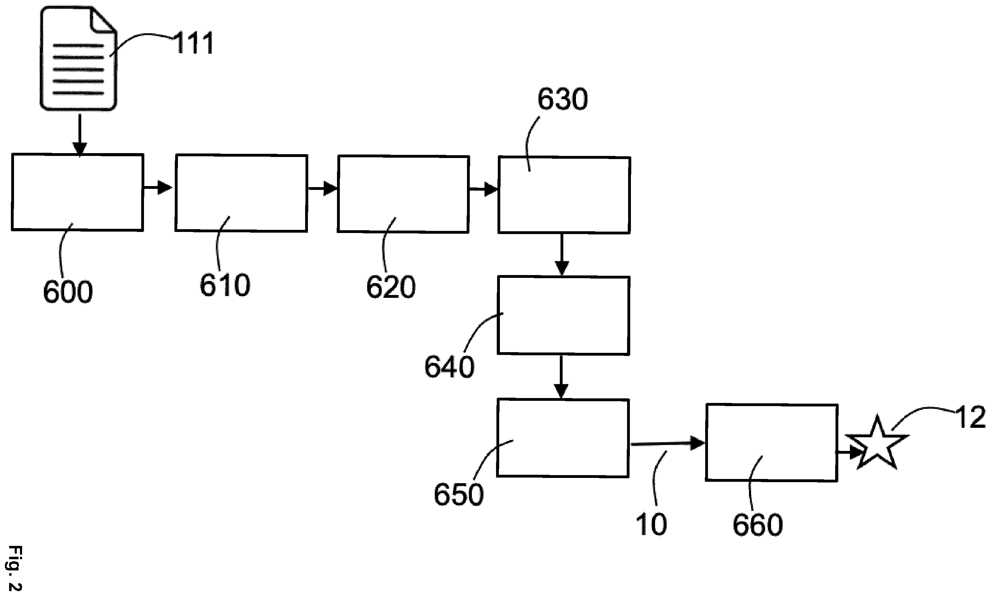

Figure 2 illustrates a flow diagram of the cyber risk assessment method using the cyber risk assessment system 100 described with respect to Figure 1. In a report input step 600, the status assessment module 110 receives the computer application status report 111 as input signal 112 and the detection means 113 detects and extracts the type parameters 51, 52, 53 for the set of type identification data 5. The computer application status report 111 is represented by a cloud infrastructure report summarizing cloud infrastructure services represented by storage services of the storage module 221 for storing one or more types of information data, by data processing services for processing information data of the processing/operating tools 222 and by the cyber security services of the cyber security tools 223. Advantageously, a cloud infrastructure bills or invoices provided by the cloud providers can be used in order to assess both the types of data present in the infrastructure along with the various security measures and software applications protecting these data. The computer application status report 111 can for example be provided as a pdf document.

In a type information breakdown step 610, the detection means, for example an optical character recognition (OCR) reader, extracts the information for the set of type identification data 50 from the computer application status report 111. In a parsing step 620, the set of type identification data 50 is parsed into cyber security tools 223 that are relevant for the identified type of information data and types of processing/operating tools extracted from the report and not or less relevant information data and tools. In an allocation step 630, the risk allocation module 120 receives the set of type identification data 50 and allocates the risk factors 61 to the type parameter 51, 52, 53 of the set of type identification data 50 based on the risk classification scheme classifying the potential damage or loss, as mentioned above. In a weighing step 640, the weighing module 130 obtains the set of type identification data 50 and the associated cyber risk factors 61 of the type parameters 51, 52, 53 as input data for the machine learning structure 131. The regression model of the machine learning structure 131 dynamically defines a weighing factor 70 for the risk factors 61, and the weighing module 130 weighs the risk factor 61s associated to the detected type parameters of the set of type identification data 50 based on the weighing factors 70. In an aggregating step 650, the aggregating structure 141 of the aggregation module 140 aggregates the weighted risk factors 71 as the aggregated cyber risk score 10 for the computer application 200. Finally, in a risk transfer step 660 the aggregated cyber risk score10 is provided to the insurance premium module 170, which transfers the aggregated cyber risk score10 into an insurance premium value 12, which can be used as the basis for a risk transfer policy.

The cyber risk assessment system 100 and the corresponding method using the machine learning approach allows a fully automated process requiring no or minimal manual intervention and reduces the turnaround time for cyber insurance premium pricing decisions. The cyber risk assessment system enables accurate assessment of the cyber-risk posture of the computer application 200 through powerful data-driven methods.

### List of references

10 Aggregated cyber risk score
12 Insurance coverage gap value
20 User organization
50 Set of type identification data
   51 Information data type parameters
      511 Text data
      512 Image data
   52 Processing/operating tools parameters
      521 Text editor
      522 Adobe photoshop
      523 Email software
   53 Cyber security tools parameters
      531 Bitdefender tool
      532 Norton tool
      533 Barracuda email defense tool
60 Risk classification scheme / risk classification structure
   61 Cyber risk factors
70 Weighing factors
   71 Weighted cyber risk factors
80 Cyber risk event
100 Machine-learning-based cyber-attack susceptibility monitoring system or machine-learning-based cyber risk system
   110 Status assessment module
      111 Computer application status report
      112 Input signal
      113 Detector means
   120 Susceptibility aggregation monitor or risk allocation module
      121 Risk allocation structure
   130 Weighing module
      131 Machine learning structure
   140 Aggregation module
      141 Aggregation structure
   150 Output signal generator
   160 Controller module
      161 Steering signal
   170 Insurance premium module
200 Computer application
   210 Computer devices
      211 Display
      212 Processing unit
      213 Storage unit
      214 Software module
   220 Cloud infrastructure
      221 Storage module
      222 Processing/operating tools
      223 Cyber security tools
   230 Cyber risk insurance architecture
300 Digital data transmission network
   310 Satellite
600 Report input step
610 Type information breakdown step
620 Parsing step
630 Allocation step
640 Weighing step
650 Aggregation step
660 Risk transfer step

## Claims

1. A machine-learning-based cyber-attack susceptibility monitoring system (100) for measuring a cyber-attack susceptibility or cyber risk score providing a quantitative measure for a future damage or loss probability associated with a cyber-attack event (80) impacting a computer application (200), wherein the computer application (200) is using at least one computer device (210) with electronic means (211, ..., 214) and a cloud infrastructure (2220), wherein the cloud infrastructure (220) comprises at least one storage module (221) providing information data for the computer application (200) and/or one or more processing/operating tools (222) processing information data and/or one or more cyber security tools (223) configured to identify and/or fend off a potential cyber risk event (80), whereby the machine-learning-based cyber susceptibility monitoring system (100) comprises a status assessment module (110) for receiving a computer application status report (111) as an input signal (112), a susceptibility aggregation monitor (156) for allocating one or more cyber risk factors (61), the cyber risk factors (61) being based on a risk classification scheme (60) classifying the potential damage or loss, an aggregation module (140), and an output signal generator (150) providing an aggregated cyber risk score (10) as an output signal of the machine-learning-based cyber risk system (100), **characterized in that**
the status assessment module (110) comprises detection means (113) for detecting and/or extracting type parameters identifying a set of type identification data (50) from the computer application status report (111), wherein the set of type identification data (50) comprises information data type parameters (51) identifying a type of the information data and/or processing/operating tools parameters (52) identifying a type of the one or more processing/operating tools (222)and/or cyber security tools parameters (53) identifying a type of the one or more cyber security tools (223) of the cloud infrastructure (220),
the susceptibility aggregation monitor (120) being configured to receive the set of type identification data (50) and to allocate one or more cyber risk factors (61) to at least one type parameter (51, 52, 53) of the set of type identification data (50),
a weighing module (130) comprising a machine learning structure (131) and obtaining the set of type identification data (50) and the associated one or more risk factors (61) of the at least one type parameter (51, 52, 53), wherein the machine learning structure (131) includes a regression structure for dynamically defining weighing factors (70) for the one or more risk factors (61), and wherein the weighing module (130) weighs the one or more risk factors (61) associated with the detected type parameters (51, 52, 53) of the set of type identification data (50) based on the weighing factors (70), and
the aggregation module (140) being configured to aggregate the weighted risk factors (71) as the aggregated cyber risk score (10) for the computer application (200).

2. The machine-learning-based cyber risk system (100) of a computer application (200) according to claim 1, **characterized in that** the machine-learning-based cyber risk system (100) comprises a controller module (160) for dynamically controlling the computer application (200) and the computer device (210) thereof, respectively, based on the output signal of the output signal generator 150).

3. The machine-learning-based cyber risk system (100) of a computer application (200) according to claim 1 or 2, **characterized in that** the computer application (200) is realized as a cyber risk insurance platform (230) connecting at least one user computer device (210) and the cloud infrastructure (220) via a data network (300), wherein the cyber risk insurance platform (230) comprises an insurance premium module (170) for dynamically transferring the aggregated cyber risk score (10) into an insurance premium value.

4. The machine-learning-based cyber risk system (100) of a computer application (200) according to any one of claims 1 to 3, **characterized in that** the computer application status report (111) is represented by a cloud infrastructure report summarizing cloud infrastructure services represented by storage services of the storage module (221) for storing one or more types of information data and/or represented by one or more data processing services of the processing/operating tools (222) for processing information data.

5. The machine-learning-based cyber risk system (100) of a computer application (200) according to any one of claims 1 to 4, **characterized in that** a cyber risk factor (61) represents a quantified probability of the occurrence of a cyber risk event (80) impacting the computer application (200), wherein the quantified probability is associated with measuring parameters of a classified cyber risk event (80) for capturing a risk exposure, the risk factor being based on the risk classification scheme classifying a potential damage correlated with the types of information data and/or processing/operating tools (222) and/or cyber security tools (223) defined by the type parameters.

6. The machine-learning-based cyber risk system (100) of a computer application (200) according to any one of claims 1 to 5, **characterized in that** the regression structure of the machine learning structure (141) is realized as a linear regression model or a L2-enabled Ridge Regression model.

7. The machine-learning-based cyber risk system (100) of a computer application (200) according to any one of claims 1 to 5, **characterized in that** the regression structure of the machine learning structure (141) is realized as a random forest model or a gradient boosted model.

8. A machine-learning-based cyber risk method for assessing a cyber risk exposure of a computer application (200), which measures a cyber risk score indicating a potential damage or loss related to a cyber risk event (80) impacting the computer application (200), wherein the computer application (200) uses at least one computer device (210) with electronic means (211, ..., 214) and a cloud infrastructure (220), wherein the cloud infrastructure (220) comprises at least one storage module (221) providing information data for the computer application (200) and/or one or more processing/operating tools (222 ) processing information data, whereby the machine-learning-based cyber risk method uses a machine-learning-based cyber risk system (100) according to one of the claims 1 - 7, wherein the risk factor (61) is based on a risk classification scheme (60) classifying the potential damage or loss (80), wherein the susceptibility aggregation monitor (120) allocates one or more risk factors (61), and wherein the output signal generator (150) provides an aggregated cyber risk score (10) as an output signal, **characterized in that**
the status assessment module (110) receives a computer application status report (11) as an input signal (112) and the detection means (113) detects and/or extracts type parameters identifying a type of the information data (51), a type of the one or more processing/operating tools (52) and/or a type of one or more cyber security tools (53) from the computer application status report (111) and provides a set of type identification data (50),
the susceptibility aggregation monitor (120) receives the set of type identification data (50) and allocates one or more risk factors (61) to at least one type parameter (51, 52, 53) of the set of type identification data (50),
the weighing module (130) obtains the set of type identification data (50) and the associated one or more risk factors (61) of the at least one type parameter as input data for the machine learning structure (131) including the regression structure, which dynamically defines a weighing factor (70) for the one or more risk factors (61), and wherein the weighing module (130) weighs the one or more risk factors (61) associated with the detected type parameter (51, 52, 53) of the set of type identification data (50) based on the weighing factors (70), and
the aggregation module (140) aggregates the weighted risk factors (71) as the aggregated cyber risk score (10) for the computer application (200).

9. The machine-learning-based cyber risk method according to claim 8,
**characterized in that** the risk classification scheme (60) comprises several risk categories (A, B, C, D, ...) at least including a risk category for computer application downtime, time for replacing the computer application, for costs of resource losses, for costs of information data abuse and/or for costs of third party liability, wherein each risk category includes one or more risk factors (61) corresponding to a potential damage or loss in case of a cyber risk event (80).

10. The machine-learning-based cyber risk method according to claim 8 or 9, **characterized in that** risk factors (61) of the risk classification scheme (60) corresponding to a potential damage or loss (80) are defined by a previously measured and/or calculated damage or loss caused by a specified cyber risk event impacting a specified type of information data (51) and/or a specified type of data processing/operating tool (52), while at least one specified type of a cyber security tool (53) is in place to fend off the specified cyber risk event.

11. The machine-learning-based cyber risk method according to one of claims 8 - 10, **characterized in that** risk factors (61) of the risk classification scheme (60) corresponding to a potential damage or loss are defined by previously measured and/or calculated damage or loss caused by a cyber risk event (80) impacting a specified type of information data (51), a specified type of data processing/operating tool (52) and/or a specified type of a cyber security tool (53), wherein the measured and/or calculated damage or loss is **characterized by** measuring damage or loss parameters of a time period of computer application downtime, a time period for replacing the computer application, costs of resource losses, costs of information data abuse and/or costs of third party liability, and wherein measuring values of the damage or loss parameters are associated to a risk factor (61 ).

12. The machine-learning-based cyber risk method according to any one of claims 8 to 11, **characterized in that** a cyber risk factor (61) is determined for specifiec combinations of a cyber security tool with a specified type of information data and/or a specified data processing/operating tool and/or another specified cyber security tool.

13. The machine-learning-based cyber risk method according to any one of claims 8 to 12, **characterized in that** the cyber security tools (223) are categorized in at least categories of appropriateness for identifying and/or fending off a potential cyber risk event (80), defensive power referring to effectiveness of the tool and/or cohesion of two or more cyber security tools referring to effectiveness of tool combinations.

14. A machine-learning-based cyber risk insurance platform (230) comprising a machine-learning-based cyber risk system (100) according to one of claims 1 - 7.

15. The machine-learning-based cyber risk insurance platform (230) according to claim 14, wherein the cloud infrastructure (220) is accessible via a digital network (300) and at least one application programming interface (API) for accessing information data of the computer application (200).

## Patentansprüche

1. Auf maschinellem Lernen basierendes Überwachungssystem (100) zum Messen der Anfälligkeit für eine Cyberattacke oder eines Cyberrisikowerts, der ein quantitatives Maß für eine zukünftige Schadens- oder Verlustwahrscheinlichkeit bereitstellt, die einem Cyberattackenereignis (80) zugeordnet ist, das auf eine Computeranwendung (200) einwirkt;
wobei die Computeranwendung (200) mindestens eine Rechenvorrichtung (210) mit elektronischen Mitteln (211, ..., 214) und eine Cloud-Infrastruktur (220) verwendet, wobei die Cloud-Infrastruktur (220) mindestens ein Speichermodul (221) umfasst, das Informationsdaten für die Computeranwendung (200) bereitstellt, und/oder ein oder mehrere Verarbeitungs-/Betriebswerkzeuge (222), die Informationsdaten verarbeiten, und/oder ein oder mehrere Cybersicherheitswerkzeuge (223), die dazu konfiguriert sind, ein potenzielles Cyberrisikoereignis (80) zu identifizieren und/oder abzuwehren, wodurch das auf maschinellem Lernen basierende Cyberanfälligkeitsüberwachungssystem (100) ein Zustandsbeurteilungsmodul (110) zum Empfangen eines Computeranwendungszustandsberichts (111) als ein Eingangssignal (112), einen Anfälligkeitsaggregationsmonitor (156) zum Zuordnen eines oder mehrerer Cyberrisikofaktoren (61), wobei die Cyberrisikofaktoren (61) auf einem Risikoklassifizierungssystem (60) basieren, das den potenziellen Schaden oder Verlust klassifiziert, ein Aggregationsmodul (140) und einen Ausgangssignalgenerator (150), der einen aggregierten Cyberrisikowert (10) als ein Ausgangssignal des auf maschinellem Lernen basierenden Cyberrisikosystems (100) bereitstellt, umfasst, **dadurch gekennzeichnet, dass**
das Zustandsbeurteilungsmodul (110) Erfassungsmittel (113) zum Erfassen und/oder Extrahieren von Typparametern umfasst, die einen Satz von Typidentifikationsdaten (50) aus dem Computeranwendungszustandsbericht (111) identifizieren, wobei der Satz von Typidentifikationsdaten (50) Informationsdatentypparameter (51), die einen Typ der Informationsdaten identifizieren, und/oder Verarbeitungs-/Betriebswerkzeugparameter (52), die einen Typ des einen oder der mehreren Verarbeitungs-/Betriebswerkzeuge (222) identifizieren, und/oder Cybersicherheitswerkzeugparameter (53), die einen Typ des einen oder der mehreren Cybersicherheitswerkzeuge (223) der Cloud-Infrastruktur (220) identifizieren, umfasst,
wobei der Anfälligkeitsaggregationsmonitor (120) dazu konfiguriert ist, den Satz von Typidentifikationsdaten (50) zu empfangen und einen oder mehrere Cyberrisikofaktoren (61) mindestens einem Typparameter (51, 52, 53) des Satzes von Typidentifikationsdaten (50) zuzuordnen,
wobei ein Gewichtungsmodul (130), das eine Struktur (131) zum maschinellen Lernen und Erhalten des Satzes von Typidentifikationsdaten (50) und des zugeordneten einen oder mehreren Risikofaktoren (61) des mindestens einen Typparameters (51, 52, 53) umfasst, wobei die Struktur (131) zum maschinellen Lernen eine Regressionsstruktur zum dynamischen Definieren von Gewichtungsfaktoren (70) für den einen oder die mehreren Risikofaktoren (61) beinhaltet, und wobei das Gewichtungsmodul (130) den einen oder die mehreren Risikofaktoren (61), die den erfassten Typparametern (51, 52, 53) des Satzes von Typidentifikationsdaten (50) basierend auf den Gewichtungsfaktoren (70) zugeordnet sind, gewichtet,
wobei das Aggregationsmodul (140) dazu konfiguriert ist, die gewichteten Risikofaktoren (71) als den aggregierten Cyberrisikowert (10) für die Computeranwendung (200) zu aggregieren.

2. Auf maschinellem Lernen basierendes Cyberrisikosystem (100) einer Computeranwendung (200) nach Anspruch 1, **dadurch gekennzeichnet, dass** das auf maschinellem Lernen basierende Cyberrisikosystem (100) ein Controllermodul (160) zum dynamischen Steuern der Computeranwendung (200) und deren Rechenvorrichtung (210) jeweils basierend auf dem Ausgangssignal des Ausgangssignalgenerators (150) umfasst.

3. Auf maschinellem Lernen basierendes Cyberrisikosystem (100) einer Computeranwendung (200) nach Anspruch 1 oder 2, **dadurch gekennzeichnet, dass** die Computeranwendung (200) als eine Cyberrisikoversicherungsplattform (230) realisiert ist, die mindestens eine Benutzerrechenvorrichtung (210) und die Cloud-Infrastruktur (220) über ein Datennetzwerk (300) verbindet, wobei die Cyberrisikoversicherungsplattform (230) ein Versicherungsprämienmodul (170) zum dynamischen Transferieren des aggregierten Cyberrisikowerts (10) in einen Versicherungsprämienwert umfasst.

4. Auf maschinellem Lernen basierendes Cyberrisikosystem (100) einer Computeranwendung (200) nach einem der Ansprüche 1 bis 3, **dadurch gekennzeichnet, dass** der Computeranwendungszustandsbericht (111) von einem Cloud-Infrastruktur-Bericht dargestellt wird, der Cloud-Infrastruktur-Dienste zusammenfasst, die von Speicherdiensten des Speichermoduls (221) zum Speichern eines oder mehrerer Typen von Informationsdaten dargestellt werden, und/oder von einem oder mehreren Datenverarbeitungsdiensten der Verarbeitungs-/Betriebswerkzeuge (222) zum Verarbeiten von Informationsdaten dargestellt werden.

5. Auf maschinellem Lernen basierendes Cyberrisikosystem (100) einer Computeranwendung (200) nach einem der Ansprüche 1 bis 4, **dadurch gekennzeichnet, dass** ein Cyberrisikofaktor (61) eine quantifizierte Wahrscheinlichkeit des Auftretens eines Cyberrisikoereignisses (80), das sich auf die Computeranwendung (200) auswirkt, darstellt, wobei die quantifizierte Wahrscheinlichkeit Messparametern eines klassifizierten Cyberrisikoereignisses (80) zum Aufnehmen einer Risikoexposition zugeordnet ist, wobei der Risikofaktor auf einem Risikoklassifizierungssystem basiert, das einen potenziellen Schaden im Zusammenhang mit den Typen von Informationsdaten und/oder Verarbeitungs-/Betriebswerkzeugen (222) und/oder Cybersicherheitswerkzeugen (223), die von den Typparametern definiert sind, klassifiziert.

6. Auf maschinellem Lernen basierendes Cyberrisikosystem (100) einer Computeranwendung (200) nach einem der Ansprüche 1 bis 5, **dadurch gekennzeichnet, dass** die Regressionsstruktur der Struktur (141) zum maschinellen Lernen als ein lineares Regressionsmodell oder ein L2-basierendes Ridge-Regressionsmodell realisiert ist.

7. Auf maschinellem Lernen basierendes Cyberrisikosystem (100) einer Computeranwendung (200) nach einem der Ansprüche 1 bis 5, **dadurch gekennzeichnet, dass** die Regressionsstruktur der Struktur (141) zum maschinellen Lernen als ein Random-Forest-Modell oder als ein Gradient-Boosting-Modell realisiert ist.

8. Auf maschinellem Lernen basierendes Cyberrisikoverfahren zum Beurteilen einer Cyberrisikoexposition einer Computeranwendung (200), das einen Cyberrisikowert misst, der einen potenziellen Schaden oder Verlust in Bezug auf ein Cyberrisikoereignis (80) angibt, das sich auf die Computeranwendung (200) auswirkt, wobei die Computeranwendung (200) mindestens eine Rechenvorrichtung (210) mit elektronischen Mitteln (211, ..., 214) und eine Cloud-Infrastruktur (220) verwendet, wobei die Cloud-Infrastruktur (220) mindestens ein Speichermodul (221) umfasst, das Informationsdaten für die Computeranwendung (200) bereitstellt, und/oder ein oder mehrere Verarbeitungs-/Betriebswerkzeuge (222), die Informationsdaten verarbeiten, wodurch das auf maschinellem Lernen basierende Cyberrisikoverfahren ein auf maschinellem Lernen basierendes Cyberrisikosystem (100) nach einem der Ansprüche 1-7 verwendet, wobei der Risikofaktor (61) auf einem Risikoklassifizierungssystem (60) basiert, das den potenziellen Schaden oder Verlust (80) klassifiziert, wobei der Anfälligkeitsaggregationsmonitor (120) einen oder mehrere Risikofaktoren (61) zuordnet, und
wobei der Ausgangssignalgenerator (150) einen aggregierten Cyberrisikowert (10) als ein Ausgangssignal bereitstellt, **dadurch gekennzeichnet, dass**
das Zustandsbeurteilungsmodul (110) einen Computeranwendungszustandsbericht (11) als ein Eingangssignal (112) empfängt, und das Erfassungsmittel (113) Parameter erfasst und/oder extrahiert, die einen Typ der Informationsdaten (51), einen Typ des einen oder der mehreren Verarbeitungs-/Betriebswerkzeuge (52) und/oder einen Typ eines oder mehrerer Cybersicherheitswerkzeuge (53) aus dem Computeranwendungszustandsbericht (111) identifizieren und einen Satz von Typidentifikationsdaten (50) bereitstellen,
wobei der Anfälligkeitsaggregationsmonitor (120) einen Satz von Typidentifikationsdaten (50) empfängt und einen oder mehrere Risikofaktoren (61) mindestens einem Typparameter (51, 52, 53) des Satzes von Typidentifikationsdaten (50) zuordnet,
das Gewichtungsmodul (130) den Satz von Typidentifikationsdaten (50) und den zugeordneten einen oder mehrere Risikofaktoren (61) des mindestens einen Typparameters als Eingangsdaten für die Struktur (131) zum maschinellen Lernen erhält, einschließlich der Regressionsstruktur, die dynamisch einen Gewichtungsfaktor (70) für den einen oder die mehreren Risikofaktoren (61) definiert, und wobei das Gewichtungsmodul (130) den einen oder die mehreren Risikofaktoren (61), die dem erfassten Typparameter (51, 52, 53) des Satzes von Typidentifikationsdaten (50) basierend auf den Gewichtungsfaktoren (70) zugeordnet sind, gewichtet, und
das Aggregationsmodul (140) die gewichteten Risikofaktoren (71) als den aggregierten Cyberrisikowert (10) für die Computeranwendung (200) aggregiert.

9. Auf maschinellem Lernen basierendes Cyberrisikoverfahren nach Anspruch 8,
**dadurch gekennzeichnet, dass** das Risikoklassifizierungssystem (60) mehrere Risikokategorien (A, B, C, D, ...) umfasst, die mindestens eine Risikokategorie für Computeranwendungsausfallszeit, Zeit zum Ersetzen der Computeranwendung, für Kosten von Ressourcenverluste, für Kosten von Informationsdatenmissbrauch und/oder für Kosten von Haftpflicht beinhaltet, wobei jede Risikokategorie einen oder mehrere Risikofaktoren (61) beinhaltet, die einem potenziellen Schaden oder Verlust im Fall eines Cyberrisikoereignisses (80) entsprechen.

10. Auf maschinellem Lernen basierendes Cyberrisikoverfahren nach Anspruch 8 oder 9, **dadurch gekennzeichnet, dass** die Risikofaktoren (61) des Risikoklassifizierungssystems (60), die einem potenziellen Schaden oder Verlust (80) entsprechen, durch einen zuvor gemessenen und/oder berechneten Schaden oder Verlust definiert werden, der durch ein spezifiziertes Cyberrisikoereignis verursacht wird, das sich auf einen spezifizierten Typ von Informationsdaten (51) und/oder einen spezifizierten Typ von Datenverarbeitungs-/Betriebswerkzeug (52) auswirkt, während mindestens ein spezifizierter Typ eines Cybersicherheitswerkzeugs (53) an Ort und Stelle ist, um das spezifizierte Cyberrisikoereignis abzuwehren.

11. Auf maschinellem Lernen basierendes Cyberrisikoverfahren nach einem der Ansprüche 8-10, **dadurch gekennzeichnet, dass** Risikofaktoren (61) des Risikoklassifizierungssystems (60), die einem potenziellen Schaden oder Verlust entsprechen, durch zuvor gemessenen und/oder berechneten Schaden oder Verlust definiert werden, der durch ein Cyberrisikoereignis (80) verursacht wird, das sich auf einen spezifizierten Typ von Informationsdaten (51) einen spezifizierten Typ von Datenverarbeitungs-/Betriebswerkzeug (52) und oder einen spezifizierten Typ eines Cybersicherheitswerkzeugs (53) auswirkt, wobei der gemessene und/oder berechnete Schaden oder Verlust durch Messen von Schadens- oder Verlustparametern eines Zeitraums von Computerawendungsausfallszeit, eines Zeitraums zum Ersetzen der Computeranwendung, Kosten von Ressourcenverlusten, Kosten von Informationsdatenmissbrauch und/oder Kosten von Haftpflicht charakterisiert werden, und wobei Messwerte der Schadens- oder Verlustparameter einem Risikofaktor (61) zugeordnet sind.

12. Auf maschinellem Lernen basierendes Cyberrisikoverfahren nach einem der Ansprüche 8 bis 11, **dadurch gekennzeichnet, dass** ein Cyberrisikofaktor (61) für spezifizierte Kombinationen eines Cybersicherheitswerkzeugs mit einem spezifizierten Typ von Informationsdaten und/oder einem spezifizierten Datenverarbeitungs-/Betriebswerkzeug und/oder einem anderen spezifizierten Cybersicherheitswerkzeug bestimmt wird.

13. Auf maschinellem Lernen basierendes Cyberrisikoverfahren nach einem der Ansprüche 8 bis 12, **dadurch gekennzeichnet, dass** die Cybersicherheitswerkzeuge (223) in mindestens Kategorien von Eignung zum Identifizieren und/oder Abwehren eines potenziellen Cyberrisikoereignisses (80), defensive Leistung, die auf die Effektivität des Werkzeugs und/oder die Kohäsion zweier oder mehrerer Cybersicherheitswerkzeugen verweist, die auf Effektivität von Werkzeugkombinationen hinweisen, kategorisiert sind.

14. Auf maschinellem Lernen basierende Cyberrisikoversicherungsplattform (230), die ein auf maschinellem Lernen basierendes Cyberrisikosystem (100) nach einem der Ansprüche 1-7 umfasst.

15. Auf maschinellem Lernen basierende Cyberrisikoversicherungsplattform (230) nach Anspruch 14, wobei die Cloud-Infrastruktur (220) über ein digitales Netzwerk (300), und mindestens eine Anwendungsprogrammierschnittstelle (API) zum Zugreifen auf Informationsdaten der Computeranwendung (200), zugänglich ist.

## Revendications

1. Système de surveillance de la vulnérabilité aux cyberattaques (100) basé sur l'apprentissage automatique, pour mesurer une vulnérabilité aux cyberattaques ou un score de cyber-risque fournissant une mesure quantitative de la probabilité de dommages ou de pertes futurs associés à un événement de cyberattaque (80) ayant un impact sur une application informatique (200),
dans lequel l'application informatique (200) utilise au moins un dispositif informatique (210) doté de moyens électroniques (211, ..., 214) et une infrastructure en nuage (220), dans lequel l'infrastructure en nuage (220) comprend au moins un module de stockage (221) fournissant des données d'information pour l'application informatique (200) et/ou un ou plusieurs outils de traitement/exploitation (222) traitant des données d'information et/ou un ou plusieurs outils de cybersécurité (223) configurés pour identifier et/ou parer à un événement de cyber-risque potentiel (80), moyennant quoi le système de surveillance de la vulnérabilité aux cyberattaques basé sur l'apprentissage automatique (100) comprend un module d'évaluation d'état (110) pour recevoir un rapport d'état de l'application informatique (111) en tant que signal d'entrée (112), un moniteur d'agrégation de vulnérabilité (156) pour attribuer un ou plusieurs facteurs de cyber-risque (61), les facteurs de cyber-risque (61) étant basés sur un schéma de classification des risques (60) classant les dommages ou pertes potentiels, un module d'agrégation (140), et un générateur de signal de sortie (150) fournissant un score de cyber-risque agrégé (10) en tant que signal de sortie du système de cyber-risque basé sur l'apprentissage automatique (100), **caractérisé en ce que**
le module d'évaluation d'état (110) comprend des moyens de détection (113) pour détecter et/ou extraire des paramètres de type identifiant un ensemble de données d'identification de type (50) à partir du rapport d'état de l'application informatique (111), dans lequel l'ensemble de données d'identification de type (50) comprend des paramètres de type de données d'information (51) identifiant un type de données d'information et/ou des paramètres d'outils de traitement/exploitation (52) identifiant un type d'un ou plusieurs outils de traitement/exploitation (222) et/ou des paramètres d'outils de cybersécurité (53) identifiant un type d'un ou plusieurs outils de cybersécurité (223) de l'infrastructure en nuage (220),
le moniteur d'agrégation de vulnérabilités (120) étant configuré pour recevoir l'ensemble de données d'identification de type (50) et pour attribuer un ou plusieurs facteurs de cyber-risque (61) à au moins un paramètre de type (51, 52, 53) de l'ensemble de données d'identification de type (50),
un module de pondération (130) comprenant une structure d'apprentissage automatique (131) et recevant l'ensemble de données d'identification de type (50) ainsi que un ou plusieurs facteurs de risque (61) associés d'au moins un paramètre de type (51, 52, 53), dans lequel la structure d'apprentissage automatique (131) inclut une structure de régression pour définir dynamiquement des facteurs de pondération (70) pour un ou plusieurs facteurs de risque (61) et dans lequel le module de pondération (130) pondère un ou plusieurs facteurs de risque (61) associés aux paramètres de type détectés (51, 52, 53) de l'ensemble de données d'identification de type (50) sur la base des facteurs de pondération (70), et
le module d'agrégation (140) étant configuré pour agréger les facteurs de risque pondérés (71) en un score de cyber-risque agrégé (10) pour l'application informatique (200).

2. Système de cyber-risque basé sur l'apprentissage automatique (100) d'une application informatique (200) selon la revendication 1, **caractérisé en ce que** le système de cyber-risque basé sur l'apprentissage automatique (100) comprend un module de contrôleur (160) pour commander dynamiquement l'application informatique (200) et le dispositif informatique (210) associé, respectivement, sur la base du signal de sortie du générateur de signal de sortie (150).

3. Système de cyber-risque basé sur l'apprentissage automatique (100) d'une application informatique (200) selon la revendication 1 ou 2, **caractérisé en ce que** l'application informatique (200) est réalisée sous la forme d'une plateforme d'assurance contre les cyber-risques (230) connectant au moins un dispositif informatique d'utilisateur (210) et l'infrastructure en nuage (220) via un réseau de données (300), la plateforme d'assurance contre les cyber-risques (230) comprend un module de prime d'assurance (170) pour convertir dynamiquement le score de cyber-risque agrégé (10) en une valeur de prime d'assurance.

4. Système de cyber-risque basé sur l'apprentissage automatique (100) d'une application informatique (200) selon une quelconque des revendications 1 à 3, **caractérisé en ce que** le rapport d'état de l'application informatique (111) est représenté par un rapport d'infrastructure en nuage résumant des services d'infrastructure en nuage, représentés par des services de stockage du module de stockage (221) pour stocker un ou plusieurs types de données d'information et/ou représentés par un ou plusieurs services de traitement de données des outils de traitement/exploitation (222) pour traiter des données d'information.

5. Système de cyber-risque basé sur l'apprentissage automatique (100) d'une application informatique (200) selon une quelconque des revendications 1 à 4, **caractérisé en ce qu'**un facteur de cyber-risque (61) représente une probabilité quantifiée de survenue d'un événement de cyber-risque (80) ayant un impact sur l'application informatique (200), dans lequel la probabilité quantifiée est associée à des paramètres de mesure d'un événement de cyber-risque classé (80) pour saisir une exposition au risque, le facteur de risque étant basé sur un schéma de classification des risques classant un dommage potentiel corrélé aux types de données d'information et/ou d'outils de traitement/exploitation (222) et/ou d'outils de cybersécurité (223) définis par les paramètres de type.

6. Système de cyber-risque basé sur l'apprentissage automatique (100) d'une application informatique (200) selon une quelconque des revendications 1 à 5, **caractérisé en ce que** la structure de régression de la structure d'apprentissage automatique (141) est réalisée sous la forme d'un modèle de régression linéaire ou d'un modèle de régression Ridge avec régularisation L2.

7. Système de cyber-risque basé sur l'apprentissage automatique (100) d'une application informatique (200) selon une quelconque des revendications 1 à 5, **caractérisé en ce que** la structure de régression de la structure d'apprentissage automatique (141) est réalisée sous la forme d'un modèle de forêt aléatoire ou d'un modèle de boosting de gradient.

8. Procédé d'évaluation de cyber-risque basé sur l'apprentissage automatique pour évaluer l'exposition au cyber-risque d'une application informatique (200), lequel mesure un score de cyber-risque indiquant un dommage ou une perte potentiel(le) lié(e) à un événement de cyber-risque (80) ayant un impact sur l'application informatique (200), dans lequel l'application informatique (200) utilise au moins un dispositif informatique (210) doté de moyens électroniques (211, ..., 214) et une infrastructure en nuage (220), dans lequel l'infrastructure en nuage (220) comprend au moins un module de stockage (221) fournissant des données d'information pour l'application informatique (200) et/ou un ou plusieurs outils de traitement/d'exploitation (222) traitant des données d'information, moyennant quoi le procédé d'évaluation du cyber-risque basé sur l'apprentissage automatique utilise un système de cyber-risque basé sur l'apprentissage automatique (100) selon une des revendications 1 à 7, dans lequel le facteur de risque (61) est basé sur un schéma de classification des risques (60) classant le dommage ou la perte potentiel(le) (80), dans lequel le moniteur d'agrégation de vulnérabilité (120) attribue un ou plusieurs facteurs de risque (61) et dans lequel le générateur de signal de sortie (150) fournit un score de cyber-risque agrégé (10) en tant que signal de sortie, **caractérisé en ce que**
le module d'évaluation d'état (110) reçoit un rapport d'état d'application informatique (11) en tant que signal d'entrée (112) et les moyens de détection (113) détectent et/ou extraient des paramètres de type identifiant un type des données d'information (51), un type d'un ou plusieurs outils de traitement/d'exploitation (52) et/ou un type d'un ou plusieurs outils de cybersécurité (53) à partir du rapport d'état d'application informatique (111) et fournissent un ensemble de données d'identification de type (50),
le moniteur d'agrégation de vulnérabilité (120) reçoit l'ensemble de données d'identification de type (50) et attribue un ou plusieurs facteurs de risque (61) à au moins un paramètre de type (51, 52, 53) de l'ensemble de données d'identification de type (50),
le module de pondération (130) obtient l'ensemble de données d'identification de type (50) et un ou plusieurs facteurs de risque (61) associés d'au moins un paramètre de type en tant que données d'entrée pour la structure d'apprentissage automatique (131) incluant la structure de régression, qui définit dynamiquement un facteur de pondération (70) pour un ou plusieurs facteurs de risque (61) et dans lequel le module de pondération (130) pondère un ou plusieurs facteurs de risque (61) associés au paramètre de type détecté (51, 52, 53) de l'ensemble de données d'identification de type (50) sur la base des facteurs de pondération (70) et
le module d'agrégation (140) agrège les facteurs de risque pondérés (71) en tant que score de cyber-risque agrégé (10) pour l'application informatique (200).

9. Procédé d'évaluation de cyber-risque basé sur l'apprentissage automatique selon la revendication 8,
**caractérisé en ce que** le schéma de classification des risques (60) comprend plusieurs catégories de risque (A, B, C, D, ...) incluant au moins une catégorie de risque pour la durée d'indisponibilité d'une application informatique, le temps de remplacement de l'application informatique, les coûts liés aux pertes de ressources, les coûts liés à l'utilisation abusive de données d'information et/ou les coûts liés à la responsabilité civile envers des tiers, dans lequel chaque catégorie de risque inclut un ou plusieurs facteurs de risque (61) correspondant à un dommage ou une perte potentiel(le) en cas d'événement de cyber-risque (80).

10. Procédé d'évaluation de cyber-risque basé sur l'apprentissage automatique selon la revendication 8 ou 9,
**caractérisé en ce que** des facteurs de risque (61) du schéma de classification des risques (60) correspondant à un dommage ou une perte potentiel(le) (80) sont définis par un dommage ou une perte, préalablement mesuré(e) et/ou calculé(e), causé(e) par un événement de cyber-risque spécifié ayant un impact sur un type spécifié de données d'information (51) et/ou un type spécifié d'outil de traitement/exploitation de données (52), alors qu'au moins un type spécifié d'outil de cybersécurité (53) est en place pour parer à l'événement de cyber-risque spécifié.

11. Procédé d'évaluation de cyber-risque basé sur l'apprentissage automatique selon une quelconque des revendications 8 à 10, **caractérisé en ce que** les facteurs de risque (61) du schéma de classification des risques (60) correspondant à un dommage ou une perte potentiel(le) sont définis par un dommage ou une perte, préalablement mesuré(e) et/ou calculé(e), causé(e) par un événement de cyber-risque (80) ayant un impact sur un type spécifié de données d'information (51), un type spécifié d'outil de traitement/exploitation de données (52) et/ou un type spécifié d'outil de cybersécurité (53), dans lequel le dommage ou la perte mesuré(e) et/ou calculé(e) est caractérisé(e) par la mesure de paramètres de dommage ou de perte tels qu'une durée d'indisponibilité d'une application informatique, une durée de remplacement de l'application informatique, des coûts liés à la perte de ressources, des coûts liés à l'utilisation abusive de données d'information et/ou des coûts liés à la responsabilité civile envers des tiers et dans lequel les valeurs mesurées des paramètres de dommage ou de perte sont associées à un facteur de risque (61).

12. Procédé d'évaluation de cyber-risque basé sur l'apprentissage automatique selon une quelconque des revendications 8 à 11, **caractérisé en ce qu'**un facteur de cyber-risque (61) est déterminé pour des combinaisons spécifiques d'un outil de cybersécurité avec un type spécifié de données d'information et/ou un type spécifié d'outil de traitement/exploitation de données et/ou un autre outil de cybersécurité spécifié.

13. Procédé d'évaluation de cyber-risque basé sur l'apprentissage automatique selon une quelconque des revendications 8 à 12, **caractérisé en ce que** les outils de cybersécurité (223) sont classés selon au moins des catégories d'adéquation pour identifier et/ou parer à un événement de cyber-risque potentiel (80), la puissance défensive faisant référence à l'efficacité de l'outil et/ou la cohésion de deux outils de cybersécurité ou plus faisant référence à l'efficacité de combinaisons d'outils.

14. Plateforme d'assurance contre les cyber-risques basée sur l'apprentissage automatique (230) comprenant un système d'évaluation des cyber-risques basé sur l'apprentissage automatique (100) selon une des revendications 1 à 7.

15. Plateforme d'assurance contre les cyber-risques basée sur l'apprentissage automatique (230) selon la revendication 14, dans laquelle l'infrastructure en nuage (220) est accessible via un réseau numérique (300) et au moins une interface de programmation d'application (API) pour accéder aux données d'information de l'application informatique (200).
